# EUROPÄISCHE PATENTSCHRIFT

(11) **EP 0 567 601 B1**
(45) Veröffentlichungstag und Bekanntmachung des Hinweises auf die Patenterteilung: **31.08.1994**
(21) Anmeldenummer: 92911639.0
(22) Anmeldetag: 09.06.1992
(51) Int. Cl.: C02F 3/12, C02F 3/30

(54) **VERFAHREN UND VORRICHTUNG ZUR KLÄRUNG VON ABWASSER**
PROCESS AND DEVICE FOR PURIFYING SEWAGE
PROCEDE ET DISPOSITIF D'EPURATION D'EAUX USEES

(30) Priorität: 14.06.1991 DE 4119718; 25.11.1991 DE 4138695; 11.12.1991 DE 4140877; 23.04.1992 DE 9205523 U
(43) Veröffentlichungstag der Anmeldung: 03.11.1993
(73) Patentinhaber: SONNENREIN, Uwe, D-33129 Delbrück (DE)
(72) Erfinder: SONNENREIN, Uwe, D-33129 Delbrück (DE)
(74) Vertreter: Schirmer, Siegfried, Dipl.-Ing.
(86) Internationale Anmeldenummer: DE9200485
(87) Internationale Veröffentlichungsnummer: WO9222506

(56) Entgegenhaltungen:
- WO-A-85/05561
- DE-A- 2 129 564
- DE-A- 2 550 818
- DE-A- 2 843 677
- DE-A- 3 229 960
- FR-A- 2 139 007
- World Patent Index Latest, Section Ch, Derwent Publications Ltd., London. GB; Class D AN 863316916 & JP,B, 61 050 680 (EBARA INFILCO KK) 5.11.86

## Beschreibung

Die Erfindung betrifft ein Verfahren zur Klärung von beliebigem Abwasser, welches abbaubare Stoffe enthält, durch eine kontinuierliche Behandlung des Abwassers in mit zugeordneten Feststoff-Abscheidern versehene physikalischen Aufbereitungsstufen in Form eines Grobfeststoff- und eines Feinfeststoff-Abscheiders sowie einem nachgeschalteten Schwerstoff-Abscheider mit anschließenden Flotationsstufen, aus denen der unter Einsatz von Gas-Wasser-Mischern entstandene Feststoffschaum ausgeschieden wird sowie eine Vorrichtung zur Durchführung des Verfahrens und eine Vorrichtung zur Belüftung des Abwassers.

Die bekannten Verfahren zur Klärung von Abwasser werden bei Anwendung von mehreren Klärverfahren in Folge überwiegend in stationären Anlagen durchgeführt. Ihre bauliche Gestaltung ist aufwendig und platzintensiv sowie an gleichbleibende Abwasserinhaltsstoffe und -mengen gebunden. Bei transportablen Vorrichtungen steht im allgemeinen eine Filtertechnik im Vordergrund, neben der entweder eine biologische oder eine chemische Behandlung vorgesehen ist. Damit wird das Anwendungsgebiet auf eine Abwasserart beschränkt. Jede Filtertechnik einzeln oder schwerpunktmäßig betrieben führt zur Verstärkung der Verunreinigung im vernachlässigten Bereich. Die physikalischen Filtertechniken lösen durch Abrieb oder Turbulenzen zusätzliche Materialien im Wasser. Die biologischen Klärstufen führen zu steigender physikalischer Verunreinigung des Wassers mit Feststoffen in Form von toter und lebender Materie wie Bioschlamm, Pilzen und Schmarotzern. Die chemische Klärung über Beimengungen führt bei vorheriger weitestgehender Elimination aller anderen Verunreinigungs-Materialien zu einem übermäßigen Anfall von Sondermüll.

Jedes Verfahren für sich kommt in bestimmten Anwendungsbereichen, gezielt für bestimmte Abwasser eingesetzt und bedarfsgerecht betrieben, zu guten Leistungen. Eine zufriedenstellende und den Vorschriften für Vorflutereinleitung des gereinigten Abwassers entsprechende Gesamtklärung, insbesondere für unterschiedliche Abwasseranforderungen, ist damit jedoch nicht erreichbar.

Aus der EP 01 11 379 - A1 ist ein Verfahren der aufgezeigten Gattung zur Klärung von beliebigem Abwasser bekannt, bei dem die biologische Klärstufe als aerobe Klärstufe ausgebildet ist, so daß auch nur aerob gearbeitet wird. Die mehrfache Umwälzung erfolgt ausschließlich mit Abwasser. Weitere Klärverfahren sind bekannt aus JP 01-070 196 - A Ref., Chemical Patents Index, Derwent Publications LTD, Ref.Nr.: 89-125 464/17; US 46 64 794 - A und DE 32 29 960 - A1.

Um die jeweilige Flotation dem anfallenden Abwasser anzupassen, sind bei den bekannten Verfahren entsprechend große aufwendige Steuerungen erforderlich. Infolge eines nicht ausreichendem Auftriebs ist nicht sichergestellt, daß bei hochkonzentriertem Abwasser die abgestorbenen Bakterien und Schwebstoffe flotieren.

Der Erfindung liegt die Aufgabe zugrunde, ein Verfahren zur Klärung von beliebigem Abwasser zu beschreiben, das als Serienprodukt gefertigt für den Einsatz in einer transportablen Vorrichtung in Kompaktbauweise oder für den stationären Einsatz in Modulbauweise geeignet ist und dabei eine übergreifende Prozeßsteuerung gestattet, die die einzelnen Klärverfahren bei schwankenden Abwassermengen und sich ändernden Abwasserinhaltsstoffen den neuen Bedingungen selbständig anpaßt.

Diese Aufgabe wird erfindungsgemäß dadurch gelöst, daß das Abwasser einer aeroben und einer nachgeschalteten anaeroben biologischen Behandlung unterworfen wird mit einer mehrfachen Umwälzung in jeder einzelnen Klärstufe, wobei das aus der aeroben biologischen Klärstufe abgesaugte Abwasser zusammen mit einer aus dem zugeordneten Gas-Wasser-Mischer zugeführten Mischung aus technischem Sauerstoff und Klarwasser wieder in die aerobe biologische Klärstufe zurückgeführt wird und der Durchlauf des Abwassers durch die einzelnen Behandlungsstufen über Sensoren überwacht wird und die ermittelten Werte einer Prozeßsteuereinrichtung zur Verarbeitung mit anschließender Regelung des Durchlaufes zugeführt werden. Bei einer bevorzugten Ausbildung der Vorrichtung sind die Gas-Wasser-Mischer an eine von einem Klarwasser-Ausströmbecken zum Sammelbecken führende Klarwasser-Rückleitung als Bypaß angeschlossen. Vorteilhafterweise besteht der Feinfeststoff-Abscheider aus einer in einem zylinderförmigen Rohr rotierenden Spiralbürste mit einer in Gegenstromrichtung des durchfließenden Abwassers enger werdenden Steigung der Spiralwindungen, wobei die Wandung des Rohrs mit einer Vielzahl von rasterförmig angeordneten Löchern und Durchbrüchen versehen ist. In Ausgestaltung der Erfindung ist die aerobe biologische Klärstufe aus einem senkrecht stehenden zylinderförmigen geschlossenen Hohlkörper gebildet, der mit einem Abwasserzulauf im Bodenbereich, einem Wasserablauf im Deckel und einem den oberen Bereich des Hohlkörpers mit dem Bodenbereich verbindenden Bypaß versehen ist. Nach einer weiteren Ausbildung der Erfindung dient zur Belüftung des Abwassers eine Vorrichtung, die in einem geschlossenen Gefäß einem oberen Zulauf für ein leichtes Medium, einen unteren Zulauf für eine Mischflüssigkeit und eine Zuleitung für das Abwasser mit einem Düsenkörper aufweist, dessen Düsenkopf Verbindung zum leichten Medium hat, wobei der zylinderförmige Düsenkörper mit einer axialen Bohrung aus einem Düsenfuß, einem mit ihm verbundenen Düsenrumpf und einem aufgesetzten Düsenkopf besteht, wobei zwischen dem oben offenen Düsenkopf und dem Düsenrumpf eine ringförmige Prallkammer gebildet ist, von der eine ringförmige Düse mit kegelstumpfmantelförmig gestaltetem und in der Breite einstellbaren Düsenspalt in den Düsenaustrittsraum führt.

Weitere Merkmale der Erfindung sind in den Unteransprüchen aufgezeigt.

Die nach dem erfindungsgemäßen Verfahren arbeitende Vorrichtung erlaubt eine Protokollierung der Überwachungsdaten und ermöglicht über Datenspeicherung, -auswertung und -fernübertragung eine lückenlose Betriebskontrolle. Die erforderlichen Chemikalien lassen sich dosiert und gezielt einsetzen, und der dadurch evtl. anfallende Sondermüll-Schlamm kann separat abgeschöpft werden. Die Betriebskosten sind bei dem erfindungsgemäßen Verfahren niedrig, da das Verfahren wartungsarm abläuft und alle Komponenten verschleißarm bzw. verschleißfrei sind.

Der Funktionsablauf des Verfahrens und Ausführungsbeispiele der Vorrichtung sind in der Zeichnung dargestellt und werden nachfolgend näher beschrieben. Es zeigen:
- Fig. 1: eine schematische Anordnung einer transportablen Vorrichtung in Kompaktbauweise;

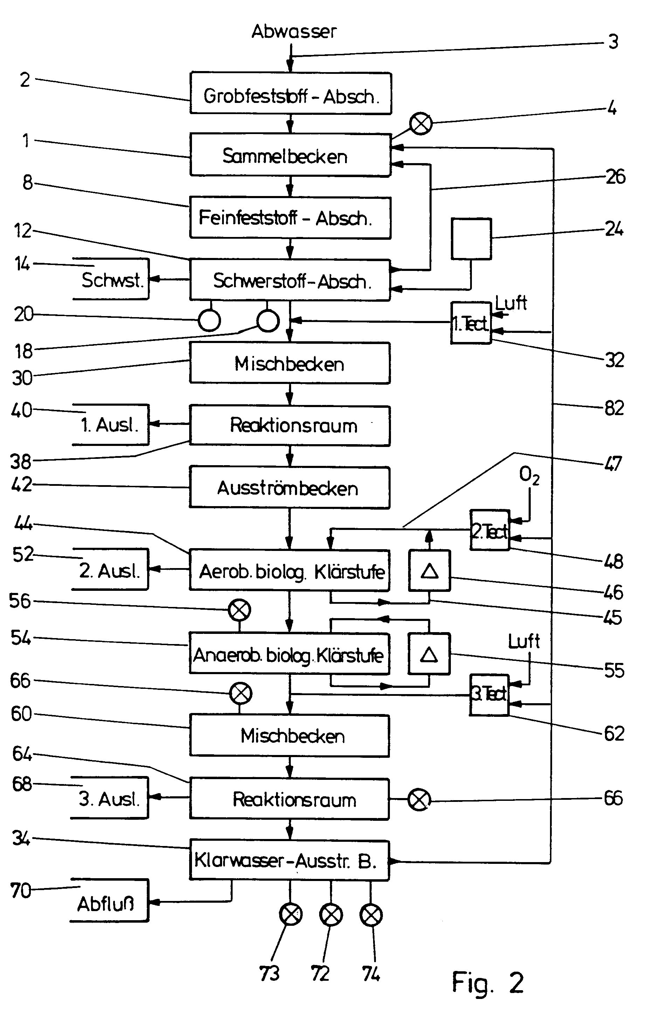

- Fig. 2: ein schematisches Fließbild des erfindungsgemäßen Verfahrens;
- Fig. 3: einen Längsschnitt durch einen Feinfeststoff-Abscheider in schematischer Darstellung;
- Fig. 4: einen Längsschnitt durch eine aerobe biologische Klärstufe in schematischer Darstellung;
- Fig. 5: eine vereinfachte Darstellung einer Belüftungsvorrichtung;
- Fig. 6: einen Längsschnitt durch eine Belüftungsvorrichtung und
- Fig. 7: eine vergrößerte Darstellung des Punktes A aus Fig. 6.

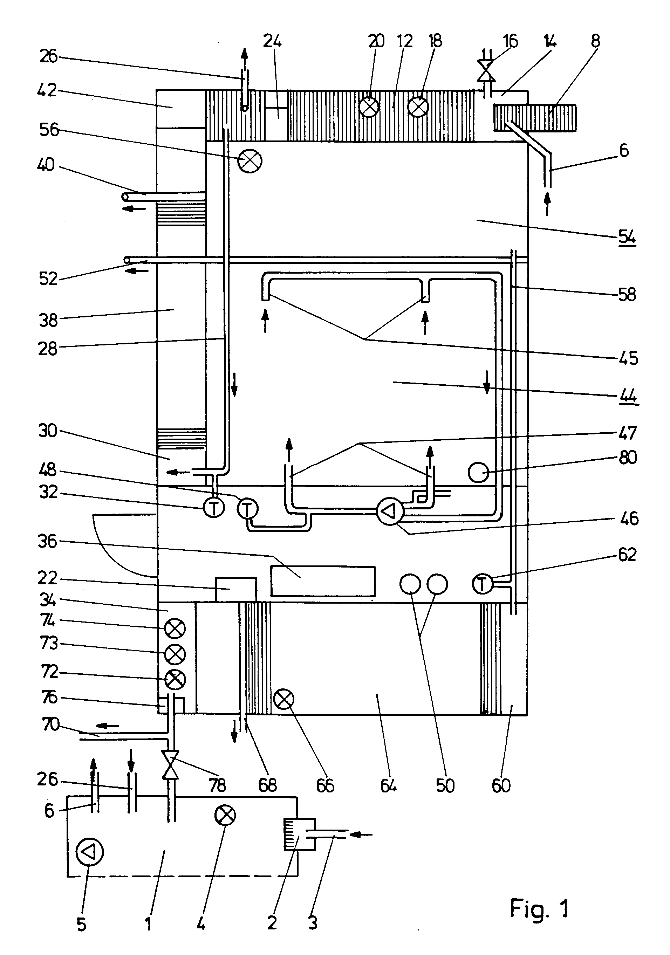

Der in Fig. 1 dargestellten Kompaktanlage ist ein Sammelbecken 1 mit einem Fassungsvermögen von beispielsweise 30 m³ mit einem Grobfeststoff-Abscheider 2 vorgeschaltet. Das zu klärende Abwasser wird dem Grobfeststoff-Abscheider 2 durch eine Sammelleitung 3 zugeführt. Der Grobfeststoff-Abscheider 2 ist zweckmäßigerweise mit einem 3 bis 5 mm-Raster ausgerüstet. Ein Sensor 4 liefert Meßwerte über den Wasserstand im Sammelbecken 1 an eine Prozeßsteuereinrichtung 22, und eine Pumpe 5 fördert das Abwasser durch eine Leitung 6 zum Feinfeststoff-Abscheider 8 mit einem 1 bis 2 mm-Raster, dem 1. Bereich der Kompaktanlage. Von hier gelangt das von den groben Bestandteilen getrennte Abwasser in ein Schwerstoff-Abscheidebecken 12, wo die Schwerstoffe < 1 bis 2 mm und schwerer als Wasser in einen Schwerstoff-Schacht 14 absinken, aus dem sie in regelmäßigen Zeitabständen manuell oder prozeßgesteuert über ein Ventil 16 abgelassen werden. Ein Wasserstandsmesser 18 und ein pH-Wert-Messer 20 überwachen den Wasserpegel und die Wasserstoffionenkonzentration im Schwerstoff-Abscheidebecken 12 kontinuierlich und liefern die Werte der Prozeßsteuereinrichtung 22, welche diese und weitere Meßwerte protokolliert und verarbeitet. Ein Kalk- und Säuredosierer 24 leitet entsprechende von der Prozeßsteuereinrichtung 22 ermittelte Stoffmengen in das physikalisch aufbereitete Abwasser. Ein Überlaufrohr 26 leitet überschüssiges Abwasser zurück in das Sammelbecken 1.

Das Abwasser wird vom Schwerstoff-Abscheidebecken 12 mittels Rohrleitung 28 in ein Mischbecken 30 der Vorflotation geleitet. Kurz vor Einleitung in das Mischbecken 30 wird luftangereichertes Wasser von einem 1. Gas-Wasser-Mischer 32, im folgenden "Tector" genannt, dem Abwasser beigemengt. Der Tector 32 arbeitet im Bypaß-Prinzip und bezieht das Mischwasser aus einem Klarwasser-Ausströmbecken 34 der Nachflotation und die Luft aus einem Kompressor 36. Das mit Luftbläschen angereicherte Wasser durchströmt einen Reaktionsraum 38. Hierbei bilden sich Feststoffschaum-Abscheidungen an der Oberfläche, die prozeßgesteuert in bestimmten Zeitabständen mit Hilfe eines Abstreifers in eine 1. Auslaufrinne 40 geschoben werden. Über ein Ausströmbecken 42 der Vorflotation wird das Abwasser in eine aerobe biologische Klärstufe 44 geleitet. Das Abwasser ist an dieser Stelle schon von 95 - 99 % aller Feststoffe gereinigt, so daß im wesentlichen nur noch die im Wasser gelösten Stoffe zu den biologischen Klärstufen gelangen. Die Arbeitseffektivität der biologischen Klärstufen wird durch die gründliche physikalische Vorreinigung um ein Vielfaches gesteigert. In der als Wälzbett-Filter ausgelegten aeroben biologischen Klärstufe 44 wird das Abwasser ständig durch ein Rohrsystem 45 abgesaugt, über eine Pumpe 46 und ein Rohrsystem 47 der Klärstufe 44 wieder zugeführt und dabei laufend durch einen 2. Tector 48 mit technischem Sauerstoff aus Sauerstoff-Flaschen 50 und Mischwasser aus dem Klarwasser-Ausströmbecken 34 der Nachflotation versorgt. Das Abwasser kann bis zu zehnmal pro Stunde umgewälzt werden und erreicht dabei eine regelbar hohe Sauerstoff-Anreicherung bis zu einem Vielfachen der normalen Sättigung. Sämtliche Tectoren werden, wie vorstehend aufgezeigt, im Bypaß betrieben, um die Entspannungsventile in störungsarmem Betrieb zu halten. Die in der aeroben biologischen Klärstufe 44 befindliche tote bakterielle Masse wird als Feststoffschaum-Abscheidung an der Oberfläche gesammelt und prozeßgesteuert in bestimmten Zeitabständen mit Hilfe eines Abstreifers, vorteilhaft in Form eines Kettenabstreifers, in eine zweite Auslaufrinne 52 geschoben. Das Abwasser wird nun durch einen Überlauf aus der aeroben biologischen Klärstufe 44 in eine anaerobe biologische Klärstufe 54 geleitet. In dieser Klärstufe erfolgt durch eine Pumpe 55 eine laufende Umwälzung des Klärwassers und eine Kontrolle des Sauerstoffgehalts durch einen Sensor 56.

Das Abwasser gelangt nach einer Behandlung in der anaeroben biologischen Klärstufe 54 über eine Rohrleitung 58 in ein Mischbecken 60 der Nachflotation. Kurz vor Einlauf in das Mischbecken 60 wird durch einen 3. Tector 62 ein Klarwasser-Luftgemisch dem Abwasser zugesetzt. Anschließend gelangt das Abwasser in einen Reaktionsraum 64 der Nachflotation, in dem an der Oberfläche wieder eine Feststoffschaum-Abscheidung erfolgt. Ein Sensor 66 überwacht den Wasserstand. In bestimmten Zeitabständen befördert ein Abstreifer prozeßgesteuert die Feststoffschaum-Abscheidung in eine 3. Auslaufrinne 68. Vom Reaktionsraum 64 gelangt das gereinigte Abwasser in das Klarwasser-Ausströmbecken 34 der Nachflotation, wo ein Sensor 72 für den pH-Wert die Wasserstoffionenkonzentration und weitere Sensoren 73 und 74 den Sauerstoffgehalt und die Wassertemperatur überwachen. Ein Niveauregler 76 läßt das gereinigte Wasser in eine Rohrleitung 70 abfließen oder über ein Ventil 78 in das Sammelbecken 1 zurückfließen, wobei für die Gas-Wasser-Mischer 32, 48 und 62 (Tectoren 1 bis 3) eine entsprechende Menge gereinigtes Wasser als Mischwasser abgezweigt wird. Durch prozeßgesteuerte Heizstäbe 80 wird die Temperatur der Klärstufen 44 und 54 konstant gehalten.

Die Prozeßsteuereinrichtung 22 überwacht und protokolliert sämtliche Meßwerte wie Wasserstand, Sauerstoff, pH-Werte, Temperatur, steuert ferner die einzelnen Funktionen der Pumpen, der Kalk- und Säure-Dosierer, die Sauerstoffdosierung, die Schaltung der Ventile, Tectoren, Abstreifer für die Feststroffschäume und Abfallmassen für den Betriebsablauf, und löst bei Störungen Alarm aus und verhindert im Alarmfall das Austreten von eventuell nicht ausreichend geklärtem Wasser.

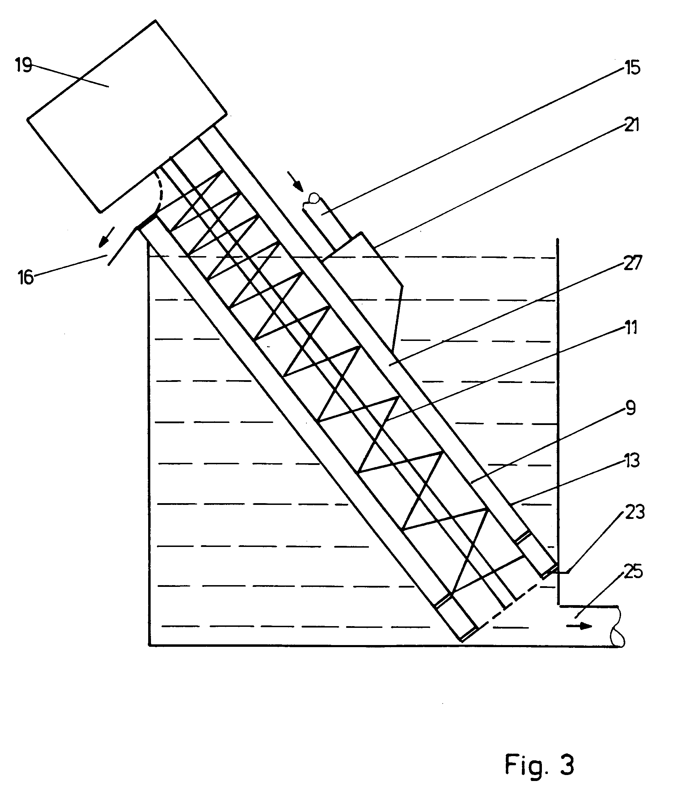

Der Feinfeststoff-Abscheider 8 besteht nach Fig. 3 im wesentlichen aus einer drehbaren Wendelbürste 11, die in einem zylinderförmigen Rohr 9 konzentrisch gelagert ist. Die Wendelbürste 11 weist eine von ihrem unteren freien Ende beginnende und nach ihrem anderen Ende, an dem ein Antriebsmotor 19 mit Getriebe angeordnet ist, abnehmende Steigung auf, d. h. die Windungen der Wendel der Bürste 11 werden nach ihrem oberen Ende hin kontinuierlich enger. Die Wandung des zylinderförmigen Rohres 9 ist mit einer Vielzahl von rasterförmig angeordneten Löchern und Durchbrüchen (nicht dargestellt) versehen, deren Öffnungsflächen an die maximale Teilchengröße der abzuscheidenden Feststoffe angepaßt ist.

Das Rohr 9 ist konzentrisch in einem Mantelrohr 13 angeordnet, das im mittleren Bereich seiner Länge einen Wasserzulaufkasten 21 mit einem Wasserzulaufrohr 15 für das zu klärende Abwasser aufweist. Das Wasserzulaufrohr 15 ist mit dem Grobfeststoff-Abscheider 2 verbunden.

Der Durchmesser des Mantelrohrs 13 ist so gewählt, daß der Abstand zur Außenfläche des inneren Rohrs 9 mit den Löchern und Durchbrüchen eine sichere Rundumverteilung des über den Wasserzulaufkasten 21 zugeführten Abwassers gestattet. Der Raum 27 zwischen dem inneren Rohr 9 und dem Mantelrohr 13 ist am unteren Ende 23 abgedichtet, während das innere Rohr 9 am unteren Ende offen ist und als Wasseraustritt 25 dient. Im oberen Bereich des inneren Rohres 9 und des Mantelrohres 13 ist an einer Seite ein Schlammausgang 17 vorgesehen.

Das zu klärende Abwasser wird durch das Wasserzulaufrohr 15 und den Wasserzulaufkasten 21 dem Zwischenraum 27 zwischen dem Mantelrohr 13 und dem Rohr 9 mit den rasterförmig angeordneten Löchern und Durchbrüchen zugeführt. Das Abwasser tritt durch die Löcher und Durchbrüche des Rohres 9 in den Bereich der durch den Antriebsmotor 19 angetriebenen und rotierenden Wendelbürste 11. Während das Wasser in Richtung auf das untere freie Ende des Rohres 9 zum Wasseraustritt 25 abfließt, werden die Feststoffe, insbesondere die Feinstoffe, von den Wendelwindungen der Wendelbürste 11 festgehalten und durch ihre immer enger werdende Steigung nach oben transportiert. Durch die nach oben in Richtung auf den Schlammausgang 27 zunehmende Feststoffmenge zwischen den Wendelwindungen und den dabei kleiner werdenden Raum werden die Feststoffe komprimiert und verdichtet über den Schlammausgang 27 ausgeworfen. Die Wendelbürste 11 hat durch ihre Rotation einen selbstreinigenden Effekt. Durch den Unterwasserbetrieb werden die Feststoffe schonend ausgetragen. Der Abrieb der Wendelbürste 11 ist geringer als bei Durchflußbetrieb.

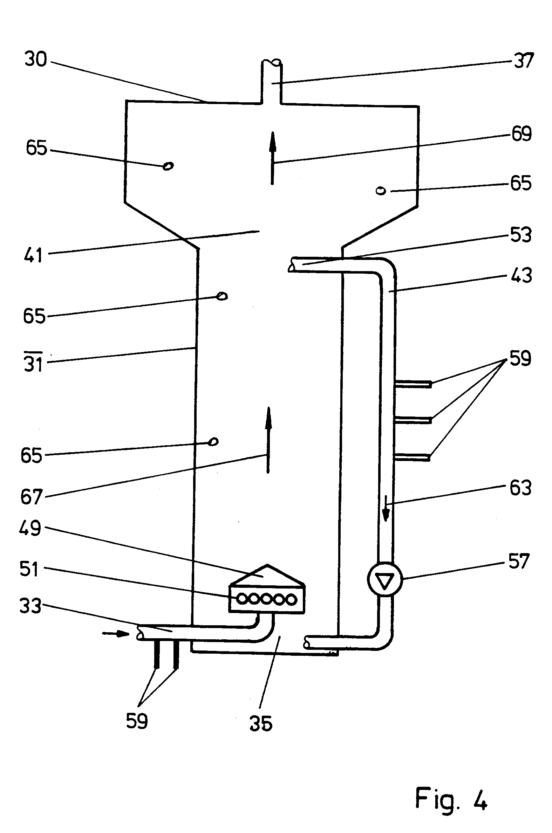

Die aerobe biologische Klärstufe 44 ist nach Fig. 4 aus einem senkrecht stehenden zylinderförmigen geschlossenen Hohlkörper 31 gebildet, der mit einem Abwasserzulauf 33 im Bodenbereich 35, einem Wasserablauf 37 im Deckel 39 und einem den oberen Bereich 41 des Hohlkörpers 31 mit dem Bodenbereich 35 verbindenden Bypaß 43 versehen ist.

Der Hohlkörper 31 kann ein Zylinder mit kreisförmigem Querschnitt sein, der in seinem oberen Drittel oder Viertel im Querschnitt stark vergrößert ist, wobei der Übergang zum oberen Bereich 41 trichterförmig ausgebildet ist. Der Abwasserzulauf 33 mündet im Bodenbereich 35 in einen Druckausstromertopf 49, dessen Mantelfläche eine Mehrzahl von kleinen Austrittsöffnungen 51 aufweist. Der lichte Querschnitt des Rohres des Wasserzulaufs 33 ist größer als die Summe der Querschnittsflächen der Austrittsöffnungen 51.

Der den oberen Bereich 41 des Hohlkörpers 31 mit dem Bodenbereich 35 verbindende Bypaß 43 weist eine Umwälzpumpe 57 auf, die eine Abwasserumwälzung in Richtung des Pfeiles 63 bewirkt. Der Bypaßeingang 53 ist so angeordnet, daß er das Abwasser an der Übergangsstelle zum vergrößerten Querschnitt des oberen Bereichs 41 absaugt. Es sind mehrere Injektionsanschlüsse 59 am Abwasserzulauf 33 und am Bypaß 43 vorgesehen, über die pH-Dosierungen, Luft, Sauerstoff oder sonstige spezielle Stoffe zugeführt werden können, deren Mengen durch eine Anzahl von Sensoren 65 computergesteuert bestimmt sind.

Im Hohlkörper 31 sind spezielle Feststoffe als Trägermaterial für Bakterienstämme eingebracht, die im Wasserfluß in Richtung des Pfeiles 67 schweben sollten. Die Bakterien haben auf der Feststoffoberfläche eine freie Entfaltungsmöglichkeit. Die vergrößerte Querschnittsfläche im oberen Bereich 41 sorgt für eine geringere Flußgeschwindigkeit, die durch den kürzeren Pfeil 69 symbolisiert ist. Die geringere Flußgeschwindigkeit ermöglicht eine Absenkung oder Rückhaltung der Feststoffe mit den Bakterien, die nicht durch den Wasserablauf 37 ausgeschwemmt, sondern durch den Bypaß 43 wieder in den Bodenbereich 35 zurückgeführt werden. Die auf dem Boden des Hohlkörpers 31 abgelagerten oder im Bodenbereich 35 angesammelten Feststoffe werden durch das aus dem Bypaß 43 und aus den Austrittsöffnungen 51 des Druckausstromertopfes 49 ausströmende Abwasser aufgewirbelt. Durch das Größenverhältnis der Austrittsöffnungen 51 zu der Durchflußöffnung des Rohres des Abwasserzulaufs 33 tritt das Abwasser aus den Austrittsöffnungen 51 unter Druck aus und kann am Boden abgelagerte Trägermaterialfeststoffe aufwirbeln und hochspülen. Die Temperatur des Abwassers wird durch Sensoren überwacht und durch computergesteuerte Heizeinrichtungen (nicht dargestellt) geregelt.

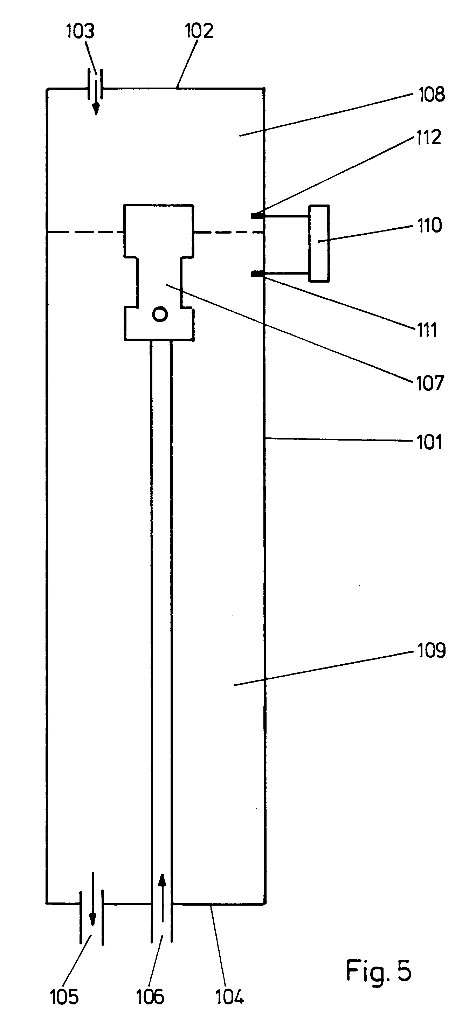

In einem senkrecht angeordneten und geschlossenen, zylinder- oder quaderförmigen Gefäß 101, vgl. Fig. 5, ist im Deckel 102 ein Zulauf 103 und im Boden 104 neben einem Ablauf 105 ein Zuleitungsrohr 106 vorgesehen, das bis in das obere Drittel des Gefäßes 101 reicht und einen im wesentlichen zylinderförmigen Düsenkörper 107 trägt. Die zu bearbeitende Flüssigkeit wird durch das Zuleitungsrohr 106 in den Düsenkörper 107 geleitet. Im oberen Bereich 108 des Gefäßes 101 befindet sich das leichtere Medium, das eine Flüssigkeit oder ein Gas sein kann und über den Zulauf 103 in der Arbeitsweise der Vorrichtung als Mischer zugeführt wird. Im unteren Bereich 109 des Gefäßes 101 sammelt sich die im Düsenkörper 107 behandelte Flüssigkeit, die durch den Ablauf 105 abgeleitet wird.

Der Niveaustand zwischen dem leichten Medium im Bereich 108 und dem schwereren Medium im Bereich 109 wird durch einen Niveaumelder 110 überwacht, der über eine nicht dargestellte Schaltelektronik die Zugabe des leichten Mediums regelt, um den Niveaustand zwischen einer Minimum-Marke 111 und einer Maximum-Marke 112 einzustellen.

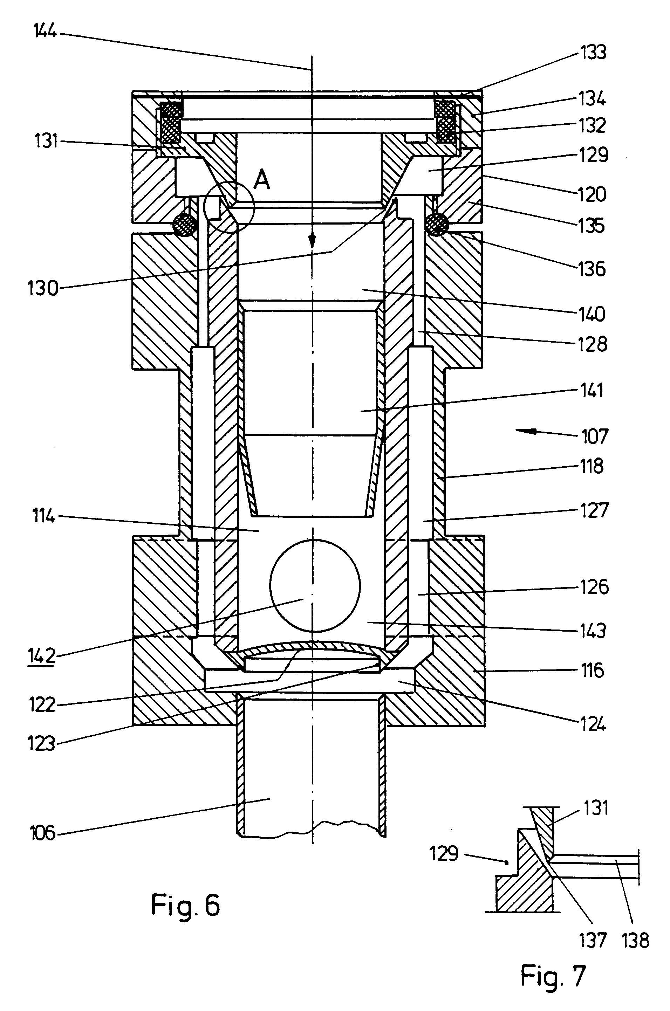

Der zylinderförmige Düsenkörper 107 (Fig. 6) besteht aus einem Düsenfuß 116 und einem Düsenrumpf 118, die fest miteinander verbunden sind, und einem aufgeschraubten mehrteiligen Düsenkopf 120. Dieser zusammengesetzte Düsenkörper weist abgesehen von einer gewölbten Abschlußkappe 122 eine durchgehende axiale Bohrung 114 auf, die etwa dem Außendurchmesser des Zuleitungsrohres 106 entspricht, das im Bodenbereich des Düsenfußes 116 mit dem Düsenkörper 107 verbunden ist. Unmittelbar über dem Ende des Zuleitungsrohres 106 ist die Bohrung 114 durch eine erste Ringnut 124 vergrößert und bildet damit einen ersten Verteilraum. Die Abschlußkappe 122 liegt über einem kurzen Rohrstück 123, das mit der Oberkante der Ringnut 124 eine umlaufende Abreißkante liefert. Von der Ringnut 124 ausgehend verlaufen eine Mehrzahl von Bohrungen 126 in axialer Richtung des Düsenkörpers 107, die in einer langgestreckten zweiten Ringnut 127 im Düsenrumpf enden. An die zweite Ringnut 127 schließen sich eine Mehrzahl von Bohrungen 128 mit geringerem Durchmesser an, die damit weitere Abreißkanten bilden. Diese Bohrungen 128 münden in einer ringförmigen Prallkammer 129 im Düsenkopf 120. Die obere Kante der axialen Bohrung 114 des Düsenrumpfes 118 ist kegelstumpfmantelförmig gestaltet und bildet das Unterteil der Düse 130. Das Düsenoberteil 131 ist mit seinem Flansch 132 und einem breiten Gummiring 133 zwischen einer Düsenwange 134 und einer Verschraubungswange 135 eingespannt und bildet den Düsenkopf 120, der unter Zwischenlage eines Gummirings 136 mit rundem Querschnitt auf den Düsenrumpf 118 aufgeschraubt wird. Durch Anspannen der Verschraubungswange 135 wird die Soll-Öffnung des Düsenspalts 137 eingestellt. Der breite Gummiring 133 erlaubt eine elastische Vertikalbewegung des Düsenoberteils 131. Hierdurch wird eine Selbstreinigung des Düsenspalts 137 ermöglicht. Wenn sich ein Teil des Düsenspalts 137 verstopft, kann sich das Düsenoberteil 131 anheben und die Düsenöffnung so erweitern, daß trotz Verschmutzung wieder die notwendige Medienmenge austreten kann und die Verschmutzung durch die erweiterte Düsenöffnung herausgespült wird. Nach Reinigung des Düsenspalts 137 stellt sich die ursprüngliche Weite durch die Federkraft des Gummirings 133 wieder ein.

Wie aus dem vergrößerten Ausschnitt in Fig. 7 ersichtlich ist, ist die Steigung der Flächen des Düsenspaltes 137 so gewählt, daß die Breite des Spaltes zur Spitze des Düsenoberteils 131 abnimmt. Außerdem ist die Kante des Düsenoberteils mit einer Abrißfase 138 ausgestattet. Auf diese Weise wird erreicht, daß der Strahl der Düse 130 die Form eines Kegelmantels einnimmt, der mit seiner Spitze auf einen auf der Mittelachse des Düsenkörpers 107 liegenden Punkt weist. In den als Düsenaustrittsraum 140 bezeichneten Teil der Bohrung 114 des Düsenrumpfes 118 ist eine Muffe 141 eingesetzt, deren unteres Ende verengt ausgebildet ist und dicht über einem oder mehreren Düsenausgängen 142 endet. In der Zeichnung ist aus Übersichtsgründen nur ein Düsenausgang 142 dargestellt. Es ist aber zweckmäßig, mehrere Ausgänge vorzusehen, um den Ablauf der Flüssigkeit nicht zu behindern. Die dem Zuleitungsrohr 106 im Eingang des Düsenfußes 116 gegenüberliegend angeordnete kugelkalottenförmige Abschlußkappe 122 sorgt am unteren Ende des Düsenablaufraums 143 durch ihre Kalottenform in Verbindung mit der konischen Verengung der Muffe 141 dafür, daß keine Mediumspritzer in den Düsenaustrittsraum 149 zurückspritzen.

Bei der Verwendung der Vorrichtung als Mischer wird die Flüssigkeit unter Druck über das Zuleitungsrohr 106 dem Düsenkörper 107 zugeführt und gelangt über die erste Ringnut 124, mehrere Bohrungen 126 in eine zweite Ringnut 127 und weitere Bohrungen 128 in eine ringförmige Prallkammer 129. Die genannten Ringnuten und Bohrungen sind aufeinanderfolgend im Mantel des Düsenkörpers 107 angeordnet. An den Übergangsstellen zwischen den Ringnuten und den Bohrungen sind Strömungsabreißkanten vorgesehen, die die Molekularstruktur der Flüssigkeit aufbrechen. Durch die mehrfache Passage der Abreißkanten vor dem Durchgang durch die Ringdüse ist die Flüssigkeit durch die gründliche Auflockerung der Molekularstruktur bestens auf die Aufgabe vorbereitet, im Düsenaustrittsraum andere Medienmoleküle aufzunehmen oder abzugeben.

An die ringförmige Prallkammer 129 schließt sich eine Ringdüse 130 an, deren Düsenspalt 137 zum Spaltende enger ausgebildet ist. Das Düsenoberteil 131 ist gegenüber dem Düsenunterteil verkürzt und mit einer Abreißfase versehen. Die Düse erzeugt einen auf den mittleren Bereich des Düsenaustrittraums 140 gerichteten kegelmantelförmigen Strahl, der aus den verschiedenen Richtungen kommend aufeinandertrifft. Durch diese Maßnahme wird praktisch etwa eine Verdoppelung der Aufprallgeschwindigkeit erzeugt. Hierbei wird durch den austretenden Strahl eine Sogwirkung in Richtung des Pfeils 144 erzeugt, wodurch ein leichteres Medium (Flüssigkeit oder Gas) über den oben offenen Düsenkopf 120 aus dem oberen Bereich 108 (Fig. 5) angesaugt, in das aus der Prallkammer 129 und der Düse 130 austretende Medium gemischt, in Richtung auf den Düsenausgang 142 gedrückt und in den unteren Bereich 109 geleitet wird.

Bei der Verwendung der Vorrichtung zum Trennen von Flüssigkeiten unterschiedlicher Dichte oder von Gasen und Flüssigkeiten erfolgt der Betrieb durch Absaugen des schwereren Mediums am Ablauf 105 und des leichteren Mediums am Zulauf 103 (Fig. 5). Durch den im Düsenkörper 107 entstehenden Sog wird das zu trennende Medium über das Zuleitungsrohr 106 angesogen. Durch die ringförmige Düse 130 wird der kegelmantelförmige Strahl in dem Düsenaustrittsraum 140 erzeugt. Die hierbei wirksam werdende hohe Aufprallgeschwindigkeit und freiwerdende Energie erzeugt eine bis in die Molekularstruktur aufgebrochene Wolke des Mediums, die ein Absaugen der Teilchen mit geringerer Dichte aus dem Düsenkopf gegen die Richtung des Pfeiles 144 ermöglicht. Die Teilchen des schwereren Mediums folgen dem vom Düsenausgang 142 wirkenden Sog und gelangen in den unteren Bereich. Das Absaugen des leichteren und des schwereren Mediums aus dem oberen bzw. unteren Bereich 108 bzw. 109 wird durch den Niveaumelder 110 überwacht und so geregelt, daß der Pegel zwischen diesen Medien in den zulässigen Grenzen gehalten wird, die durch die Min.- und Max.-Marken 111 bzw. 112 angegeben sind.

Durch die Bypaßrückführung über die Klarwasser-Rückführleitung 82 des Klarwassers in den Klärprozeß läßt sich die Bläschengröße und -menge und damit die Flotation im Mischbecken 30 der Vorflotation, der aeroben biologischen Klärstufe 44 und dem Mischbecken 60 der Nachflotation regeln.

### Aufstellung der Bezugszeichen:

- 1: Sammelbecken
- 2: Grobfeststoff-Abscheider
- 3: Sammelleitung für Abwasser
- 4: Sensor
- 5: Pumpe
- 6: Leitung
- 8: Feinfeststoff-Abscheider
- 9: Rohr von 8
- 11: Wendelbürste
- 12: Schwerstoff-Abscheidebecken
- 13: Mantelrohr
- 14: Schwerstoff-Sammelschacht
- 15: Wasserzulaufrohr
- 16: Ventil
- 17: Schlammausgang
- 18: Wasserstandsmesser
- 19: Antriebsmotor
- 20: pH-Wert-Messer
- 21: Wasserzulaufkasten
- 22: Prozeßsteuereinrichtung
- 23: unteres Ende von 9 und 13
- 24: Kalk- u.Säuredosierer
- 25: Wasseraustritt
- 26: Rückführleitung
- 27: Zwischenraum
- 28: Rohrleitung
- 30: Mischbecken
- 31: Hohlkörper
- 32: Gas-Wasser-Mischer (1. Tector)
- 33: Abwasserzulauf
- 34: Klarwasser-Ausströmbecken
- 35: Bodenbereich
- 36: Kompressor
- 37: Wasserablauf
- 38: Reaktionsraum
- 39: Deckel
- 40: 1. Auslaufrinne
- 41: oberer Bereich von 31
- 42: Ausströmbecken
- 43: Bypaß
- 44: aerobe biologische Klärstufe
- 45: Rohrsystem
- 46: Pumpe
- 47: Rohrsystem
- 48: Gas-Wasser-Mischer (2. Tector)
- 49: Druckausstromertopf
- 50: Sauerstoff-Flaschen
- 51: Austrittsöffnungen
- 52: 2. Auslaufrinne
- 53: Eingang von 43
- 54: anaerobe biologische Klärstufe
- 55: Pumpe
- 56: Sensor
- 57: Pumpe
- 58: Rohrleitung
- 59: Injektionsanschlüsse
- 60: Mischbecken
- 61: Sensor
- 62: Gas-Wasser-Mischer (3. Tector)
- 63: Pfeil
- 64: Reaktionsraum
- 65: Sensor
- 66: Sensor
- 67: Pfeil
- 68: 3. Ablaufrinne
- 69: Pfeil
- 70: Abflußleitung für Klarwasser
- 72: Sensor
- 73: Sensor
- 74: Sensor
- 76: Niveauregler
- 78: Ventil
- 80: Heizstäbe
- 82: Klarwasser-Rückführleitung
- 101: quaderförmiges Gefäß
- 102: Deckel
- 103: Zulauf
- 104: Boden
- 105: Ablauf
- 106: Zuleitungsrohr
- 107: Düsenkörper
- 108: oberer Bereich
- 109: unterer Bereich
- 110: Niveaumelder
- 111: Min.-Marke
- 112: Max.-Marke
- 114: axiale Bohrung
- 116: Düsenfuß
- 118: Düsenrumpf
- 120: Düsenrumpf
- 122: Abschlußkappe
- 123: kurzes Rohrstück
- 124: erste Ringnut
- 126: Bohrungen
- 127: zweite Ringnut
- 128: Bohrungen
- 129: Prallkammer
- 130: Ringdüse
- 131: Düsenoberteil
- 132: Flansch
- 133: Gummiring breit
- 134: Düsenwange
- 135: Verschraubungswange
- 136: Gummiring schmal
- 137: Düsenspalt
- 138: Abrißfase
- 140: Düsenaustrittsraum
- 141: Muffe
- 142: Düsenausgang
- 143: Düsenablaufraum
- 144: Pfeil

## Patentansprüche

1. Verfahren zur Klärung von beliebigem Abwasser, welches abbaubare Stoffe enthält, durch eine kontinuierliche Behandlung des Abwassers in mit zugeordneten Feststoff-Abscheidern versehene physikalischen Aufbereitungsstufen in Form eines Grobfeststoff- und eines Feinfeststoff-Abscheiders sowie einem nachgeschalteten Schwerstoff-Abscheider mit anschließenden Flotationsstufen, aus denen der unter Einsatz von Gas-Wasser-Mischern entstandene Feststoffschaum ausgeschieden wird, dadurch gekennzeichnet, daß das Abwasser einer aeroben und einer nachgeschalteten anaeroben biologischen Behandlung unterworfen wird mit einer mehrfachen, über zugeordnete Bypässe prozeßtechnisch feinregelbaren Umwälzung in jeder einzelnen Klärstufe (44; 54), wobei das aus der aeroben biologischen Klärstufe (44) abgesaugte Abwasser zusammen mit einer aus dem zugeordneten Gas-Wasser-Mischer (48) zugeführten Mischung aus technischem Sauerstoff und Klarwasser wieder in die aerobe biologische Klärstufe (44) rückgeführt wird und der Durchlauf des Abwassers durch die einzelnen Behandlungsstufen über Sensoren (4; 56; 66; 72; 73; 74) überwacht wird und die ermittelten Werte einer Prozeßsteuereinrichtung (22) zur Verarbeitung mit anschließender Regelung des Durchlaufs zugeführt werden.

2. Verfahren nach Anspruch 1, dadurch gekennzeichnet, daß dem Abwasser nach Durchlauf der physikalischen Reinigungsstufen (2; 8; 12) vor Einleitung in ein Mischbecken (30) der Vorflotation mit angeschlossenem Reaktionsraum (38) luftangereichertes Klarwasser von einem Gas-Wasser-Mischer (32) zugeführt wird.

3. Verfahren nach Anspruch 1 oder 2, dadurch gekennzeichnet, daß das Abwasser vom Mischbecken (30) mit dem angeschlossenen Reaktionsraum (38) in ein Ausströmbecken (42) überführt wird.

4. Verfahren nach einem der Ansprüche 1 bis 3, dadurch gekennzeichnet, daß dem Abwasser nach Verlassen der anaeroben biologischen Klärstufe (54) vor der Einleitung in ein Mischbecken (60) über einen Gas-Wasser-Mischer (62) luftangereichertes Klarwasser zugeführt wird.

5. Verfahren nach einem der Ansprüche 1 bis 4, dadurch gekennzeichnet, daß das Abwasser aus dem Mischbecken (60) einem Reaktionsraum (64) der Nachflotation zugeführt wird.

6. Verfahren nach einem der Ansprüche 1 bis 5, dadurch gekennzeichnet, daß aus dem Reaktionsraum (38) der Vorflotation, aus der aeroben biologischen Klärstufe (44) sowie aus dem Reaktionsraum (64) der Nachflotation jeweils eine Abscheidung des Feststoffschaums vorgenommen wird, der in einer eigenen biologischen Klärstufe entsprechend seiner Zusammensetzung und den zur Anwendung kommenden Bakterien behandelt und abgebaut wird.

7. Verfahren nach einem der Ansprüche 1 bis 6, dadurch gekennzeichnet, daß die Umwälzung des Abwassers in der aeroben biologischen Klärstufe (44) bedarfsgeregelt bis zur Erreichung einer Sauerstoff-Anreicherung des Vielfachen der normalen Sättigung durchgeführt und in der anaeroben biologischen Klärstufe (54) Sauerstoff bis gegen 0 entzogen wird.

8. Verfahren nach Anspruch 7, dadurch gekennzeichnet, daß das Abwasser bis zu zehnmal pro Stunde umgewälzt wird.

9. Verfahren nach einem der Ansprüche 1 bis 8, dadurch gekennzeichnet, daß eine Unterbrechung der Rückführung des Wassers aus dem Klarwasser-Ausströmbecken (34) zum Sammelbecken (1) und/oder eine Sperrung der Abflußleitung (70) des Klarwasser-Ausströmbeckens (34) bei Nichteinhaltung der vorgegebenen Wasserwerte bei Aufrechterhaltung der Arbeit und Versorgung der biologischen Klärstufen im internen Kreislauf automatisch eingeleitet werden.

10. Vorrichtung zur Durchführung des Verfahrens nach einem der Ansprüche 1 bis 9, dadurch gekennzeichnet, daß die Gas-Wasser-Mischer (32; 48; 62) an eine von einem Klarwasser-Ausströmbecken (34) zum Sammelbecken (1) führende Klarwasser-Rückführleitung (82) als Bypaß angeschlossen sind.

11. Vorrichtung nach Anspruch 10, dadurch gekennzeichnet, daß das Schwerstoff-Abscheidebecken (12) mit einem an eine zum Sammelbecken (1) führende Rückführleitung (26) angeschlossenen Überlauf versehen ist.

12. Vorrichtung nach Anspruch 10 oder 11, dadurch gekennzeichnet, daß in der aeroben biologischen Klärstufe (44) und in der anaeroben biologischen Klärstufe (54) prozeßgesteuerte Heizstäbe (80) zur Regelung der Temperatur angeordnet sind.

13. Vorrichtung nach einem der Ansprüche 10 bis 12, dadurch gekennzeichnet, daß im Klarwasser-Ausströmbecken (34) ein Niveauregler (76) und ein Ventil (78) zur Regelung des Klarwasserabflusses über die Abflußleitung (70) bzw. die Rückführleitung (82) zum Sammelbecken (1) angeordnet sind.

14. Vorrichtung nach einem der Ansprüche 10 bis 13, dadurch gekennzeichnet, daß der Feinfeststoff-Abscheider (8) aus einer in einem zylinderförmigen Rohr (9) rotierenden Wendelbürste (11) mit einer in Gegenstromrichtung des durchfließenden Abwassers enger werdenden Steigungen der Wendelwindungen besteht, wobei die Wandung des Rohres (9) mit einer Vielzahl von rasterförmig angeordneten Löchern und Durchbrüchen versehen ist.

15. Vorrichtung nach Anspruch 14, dadurch gekennzeichnet, daß das rasterförmig durchbrochene Rohr (9) konzentrisch in einem Mantelrohr (13) angeordnet ist, das in einem mittleren Bereich mit einem Wasserzulaufrohr (15) versehen ist.

16. Vorrichtung nach Anspruch 14 oder 15, dadurch gekennzeichnet, daß der Zwischenraum (27) zwischen dem inneren Rohr (9) und dem Mantelrohr (13) am unteren Ende (23) abgedichtet ist.

17. Vorrichtung nach einem der Ansprüche 14 bis 16, dadurch gekennzeichnet, daß das Mantelrohr (13) an seinem oberen Ende zum Rohr (9) abgedichtet ist und das Rohr (9) an einem gegen das Mantelrohr (13) abgedichteten Schlammausgang (17) angeschlossen ist.

18. Vorrichtung nach einem der Ansprüche 10 bis 17, dadurch gekennzeichnet, daß die aerobe biologische Klärstufe (44) aus einem senkrecht stehenden zylinderförmigen Hohlkörper (31) gebildet ist, der mit einem Abwasserzulauf (33) im Bodenbereich (35), einem Wasserablauf (37) im Deckel (39) oder im oberen Randbereich und einem den oberen Bereich (41) des Hohlkörpers (31) mit dem Bodenbereich (35) verbindenden Bypaß (43) versehen ist.

19. Vorrichtung nach einem der Ansprüche 10 bis 18, dadurch gekennzeichnet, daß der Abwasserzulauf (33) im Bodenbereich (35) in einen Druckausstromertopf (49) mündet, dessen Wasserzuführungsöffnung und lichte Weite des Abwasserzulaufrohres größer ist als die Summe der Austrittsöffnungen (51).

20. Vorrichtung nach einem der Ansprüche 10 bis 19, dadurch gekennzeichnet, daß die Querschnittsfläche des Hohlkörpers (31) oberhalb des Eingangs (53) des Bypasses (43) gegenüber dem unteren Bereich (35) stark vergrößert ist.

21. Vorrichtung nach einem der Asprüche 10 bis 20, dadurch gekennzeichnet, daß im Bypaß (43) eine in der Förderleistung regelbare Pumpe (57) angeordnet ist.

22. Vorrichtung nach einem der Ansprüche 10 bis 21, dadurch gekennzeichnet, daß dem Bypaß (43) und/oder dem Abwasserzulauf (33) Injektionsanschlüsse (59) für Stabilisierungsstoffe zugeordnet sind.

23. Vorrichtung nach einem der Ansprüche 10 bis 22, dadurch gekennzeichnet, daß im Hohlkörper (31) mehrere Sensoren (61) angeordnet sind.

24. Vorrichtung zur Belüftung von Abwasser, die in einem geschlossenen Gefäß einen oberen Zulauf für ein leichtes Medium, einen unteren Zulauf für eine Mischflüssigkeit und eine Zuleitung für das Abwasser mit einem Düsenkörper aufweist, dessen Düsenkopf Verbindung zum leichten Medium hat, nach Anspruch 14, dadurch gekennzeichnet, daß der zylinderförmige Düsenkörper (107) mit einer axialen Bohrung (114) aus einem Düsenfuß (116), einem mit ihm verbundenen Düsenrumpf (118) und einem aufgesetzten Düsenkopf (120) besteht, wobei zwischen dem oben offenen Düsenkopf (120) und dem Düsenrumpf (118) eine ringförmige Prallkammer (129) gebildet ist, von der eine ringförmige Düse (130) mit kegelstumpfmantelförmig gestaltetem und in der Breite einstellbaren Düsenspalt (137) in den Düsenaustrittsraum (140) führt.

25. Vorrichtung nach Anspruch 24, dadurch gekennzeichnet, daß der Düsenspalt (137) zum Düsenausgang verengt ausgebildet ist und die vom Düsenoberteil (131) gebildete Kante mit einer Abreißfase (138) ausgebildet ist.

26. Vorrichtung nach Anspruch 24 oder 25, dadurch gekennzeichnet, daß ein in eine Schraubverbindung zwischen dem Düsenrumpf (118) und dem Düsenkopf (120) eingelegter Gummiring (136) die Einstellung der Soll-Öffnung des Düsenspalts (137) gestattet.

27. Vorrichtung nach einem der Ansprüche 24 bis 26, dadurch gekennzeichnet, daß das Düsenoberteil (131) im Düsenkopf (120) durch einen breiten Gummiring (133) elastisch gelagert ist.

28. Vorrichtung nach einem der Ansprüche 24 bis 27, dadurch gekennzeichnet, daß die im Düsenaustrittsraum (140) eingesetzte Muffe (141) an seinem ausgangsseitigen Ende konisch verengt ausgebildet ist.

29. Vorrichtung nach einem der Ansprüche 24 bis 28, dadurch gekennzeichnet, daß unterhalb des konisch verengten Endes der Muffe (141) ein oder mehrere Düsenausgänge (142) vorgesehen sind.

30. Vorrichtung nach einem der Ansprüche 24 bis 29, dadurch gekennzeichnet, daß das Zuleitungsrohr (106) in einer Ringnut (124) im Düsenfuß (116) endet und im Abstand über der Ringnut mit der Abschlußkappe (122) eine umlaufende Abreißkante bildet.

31. Vorrichtung nach einem der Ansprüche 24 bis 30, dadurch gekennzeichnet, daß die von der Ringnut (124) im Düsenfuß (116) ausgehenden Bohrungen (126, 128) mit einer zwischengeordneten zweiten Ringnut (127) durch Querschnittsänderungen eine Mehrzahl von Abreißkanten bilden.

## Claims

1. Method for the clarification of any waste water, which contains decomposable substances, by a continuous treatment of the waste water in physical preparing stages, which are provided with associated solid substances separators and in the form of a coarse solid substance separator and a fine solid substance separator as well as a downstream heavy substance separator with following flotation stages, from which the solid substance foam is separated, that has arisen under the use of gas-water mixers, characterised thereby, that the waste water is subjected to an aerobic and a downstream anaerobic biological treatment with a repeated circulation, which is finely regulable in terms of process technique by way of associated bypasses, in each individual clarification stage (44; 54), wherein the waste water drawn out of the aerobic biological clarification stage (44) together with a mixture, which is supplied from the associated gas-water mixer (48), of industrial oxygen and clear water is returned again into the aerobic biological clarification stage (44) and the passage of the waste water through the individual treatment stages is monitored by way of sensors (4; 56; 66; 72; 73; 74) and the ascertained values are fed to a process control equipment (22) for processing with following regulation of the passage.

2. Method according to claim 1, characterised thereby, that clear water enriched with air from a gas-water mixer (32) is fed to the waste water after passage through the physical purification stages (2; 8; 12) before introduction into a mixing basin (30) of the preliminary flotation with connected reaction chamber (38).

3. Method according to claim 1 or 2, characterised thereby, that the waste water from the mixing basin (30) with the connected reaction chamber (38) is transferred into an outflow basin (42).

4. Method according to one of the claims 1 to 3, characterised thereby, that clear water enriched with air by way of a gas-water mixer (60) is fed to the waste water after leaving the anaerobic biological clarification stage (54) before introduction into a mixing basin (60).

5. Method according to one of the claims 1 to 4, characterised thereby, that the waste water out of the mixing basin (60) is fed to a reaction chamber (64) of the further flotation.

6. Method according to one of the claims 1 to 5, characterised thereby, that a respective separation of the solid substance foam, which is treated and decomposed in an individual biological clarification stage in accordance with its composition and the bacteria coming into use, is undertaken from the reaction chamber (38) of the preliminary flotation and from the aerobic biological clarification stage (44) as well as from the reaction chamber (64) of the further flotation.

7. Method according to one of the claims 1 to 6, characterised thereby, that the circulation of the waste water in the aerobic biological clarification stage (44) is performed regulated as needed until reaching an oxygen enrichment of a multiple of the normal saturation and oxygen is withdrawn down to 0 in the anaerobic biological clarification stage (54).

8. Method according to claim 7, characterised thereby, that the waste water is circulated up to ten times per hour.

9. Method according to one of the claims 1 to 8, characterised thereby, that an interruption of the return of the water out of the clear water outflow basin (34) to the collecting basin (1) and/or a blocking of the outflow duct (70) of the clear water outflow basin (34) is or are initiated automatically on failure to maintain the preset water values while continuing the work and supply of the biological clarification stages in the internal circuit.

10. Device for the performance of the method according to one of the claims 1 to 9, characterised thereby, that the gas-water mixers (32; 48; 62) are connected as bypass to a clear water return duct (82) leading from a clear water outflow basin (34) to the collecting basin (1).

11. Device according to claim 10, characterised thereby, that the heavy substance separating basin (12) is provided with an overflow connected to a return duct (26) leading to the collecting basin (1).

12. Device according to claim 10 or 11, characterised thereby, that process-controlled heating rods (80) for regulating the temperature are arranged in the aerobic biological clarification stage (44) and in the anaerobic biological clarification stage (54).

13. Device according to one of the claims 10 to 12, characterised thereby, that a surface level regulator (76) and a valve (78) for the regulation of the clear water outflow by way of the outflow duct (70) or the return duct (82) to the collecting basin (1) are arranged in the clear water outflow basin (34).

14. Device according to one of the claims 10 to 13, characterised thereby, that the fine solid substance separator (8) consists of a helical brush (11), which rotates in a cylindrical tube (9), with a pitch of the helical turns, which becomes closer in counterflow direction of the waste water flowing through, wherein the wall of the tube (9) is provided with a plurality of holes and passages arranged in raster shape.

15. Device according to claim 14, characterised thereby, that the tube (9) perforated in raster shape is arranged concentrically in a jacket tube (13), which is provided with a water inflow tube (15) in a middle region.

16. Device according to claim 14 or 15, characterised thereby, that the intermediate space (27) between the inner tube (9) and the jacket tube (13) is sealed off at the lower end (23).

17. Device according to one of the claims 14 to 16, characterised thereby, that the jacket tube (13) is sealed off from the tube (9) at its upper end and the tube (9) is connected to a sludge exit (17) sealed off against the jacket tube (13).

18. Device according to one of the claims 10 to 17, characterised thereby, that the aerobic biological clarification stage (44) is formed of a vertical cylindrical hollow body (31), which is provided with a waste water inlet (33) in the base region (35), a water outlet (37) in the lid (39) or in the upper rim region and a bypass (43) connecting the upper region (41) of the hollow body (31) with the base region (35).

19. Device according to one of the claims 10 to 18, characterised thereby, that the waste water inlet (33) in the base region (35) opens into a pressure discharge pot (49), the water feed opening and the clear width of the waste water inlet tube of which are larger than the sum of the exit openings (51).

20. Device according to one of the claims 10 to 19, characterised thereby, that the cross-sectional area of the hollow body (31) above the entry (53) of the bypass (43) is greatly increased by comparison with the base region (35).

21. Device according to one of the claims 10 to 20, characterised thereby, that a pump (57) of regulable conveying performance is arranged in the bypass (43).

22. Device according to one of the claims 10 to 21, characterised thereby, that injection connections (59) for stabilising substances are associated with the bypass (43) and/or the waste water inlet (33).

23. Device according to one of the claims 10 to 22, characterised thereby, that several sensors (61) are arranged in the hollow body (31).

24. Device which is for the aeration of waste water and in a closed vessel displays an upper inlet for a light medium, a lower inlet for a mixed liquid and an inlet for the waste water with a nozzle body, the nozzle head of which has a connection for the light medium, according to claim 14, characterised thereby, that the cylindrical nozzle body (107) with an axial bore (114) consists of a nozzle foot (116), a nozzle rump (118) connected therewith and a surmounted nozzle head (120), wherein an annular baffle chamber (129), from which an annular nozzle (130) with a nozzle gap (137), which is structured in the shape of a frusto-conical envelope and is settable in the width, leads into the nozzle exit chamber (140), is formed between the upwardly open nozzle head (120) and the nozzle rump (118).

25. Device according to claim 24, characterised thereby, that the nozzle gap (137) is formed to be narrowing towards the nozzle exit and the edge formed by the upper nozzle part (131) is formed with a break-away chamfer (138).

26. Device according to claim 24 or 25, characterised thereby, that a rubber ring (136), which is laid into a screw connection between the nozzle rump (118) and the nozzle head (120), permits the setting of the intended opening of the nozzle gap (137).

27. Device according to one of the claims 24 to 26, characterised thereby, that the upper nozzle part (131) is elastically borne in the nozzle head (120) by a wide rubber ring (133).

28. Device according to one of the claims 24 to 27, characterised thereby, that the socket (141), which is inserted in the nozzle exit chamber (140), is constructed to be narrowing conically at its exit end.

29. Device according to one of the claims 24 to 28, characterised thereby, that one or more nozzle exits (142) are provided underneath the conically narrowed end of the socket (141).

30. Device according to one of the claims 24 to 29, characterised thereby, that the feed tube (106) ends in an annular groove (124) in the nozzle foot (116) and forms an encircling break-away edge with the closure cap (122) at a spacing above the annular groove.

31. Device according to one of the claims 24 to 30, characterised thereby, that the bores (126, 128) emanating from the annular groove (124) in the nozzle foot (116) from a plurality of break-away edges due to changes in cross-section with an interposed second annular groove (127).

## Revendications

1. Procédé pour clarifier n'importe quelles eaux usées qui contiennent des matières dégradables, au moyen d'un traitement continu des eaux usées dans des étages de préparation physiques pourvu de séparateurs associés de matières solides, sous la forme d'un séparateur de matières solides grossières et d'un séparateur de matières solides fines ainsi que d'un séparateur de matières lourdes monté en aval avec, à la suite, des étages de flottation à partir desquels on sépare la mousse de matières solides provenant de mélangeurs gaz-eau, procédé caractérisé en ce que les eaux usées sont soumises à un traitement aérobie et à un traitement anaérobie venant après, biologiques, avec une recirculation à plusieurs reprises pouvant être finement réglée au moyen de dérivations associées, dans chaque étage individuel de clarification (44 ; 54), les eaux usées aspirées à partir de l'étage de clarification aérobie biologique (44) étant ramenées, en même temps qu'un mélange alimenté à partir du mélangeur associé eau-gaz (48) se composant d'oxygène industriel et d'eau clarifiée, dans l'étape de clarification aérobie biologique (44), et l'écoulement des eaux usées étant surveillé, à travers les différents étages de traitement, au moyen de capteurs (4 ; 56 ; 66 ; 72 ; 73 ; 74), et les valeurs détectées étant amenées à un dispositif de commande du procédé (22) pour être retraitées avec ensuite une régulation de l'écoulement.

2. Procédé selon la revendication 1, caractérisé en ce qu'on amène de l'eau clarifiée enrichie en air par un mélangeur gaz-eau (32), aux eaux usées après le passage des étages de purification physique (2 ; 8 ; 12) et avant introduction dans un bassin de mélange (30) de préflottation avec chambre de réaction raccordée (38).

3. Procédé selon la revendication 1 ou 2, caractérisé en ce que les eaux usées sont transférées du bassin de mélange (30) avec chambre de réaction raccordée (38), dans un bassin d'écoulement (42).

4. Procédé selon l'une des revendications 1 à 3, caractérisé en ce que l'on amène de l'eau clarifiée enrichie en air aux eaux usées après qu'elles aient quitté l'étage de clarification biologique anaérobie (54), avant l'introduction dans un bassin de mélange (60), au moyen d'un mélangeur gaz-eau (62).

5. Procédé selon l'une des revendications 1 à 4, caractérisé en ce que les eaux usées sont amenées à partir du bassin de mélange (60) à une chambre de réaction (64) de post-flottation.

6. Procédé selon l'une des revendications 1 à 5, caractérisé en ce qu'à partir de la chambre de réaction (38) de la préflottation, à partir de l'étage aérobie biologique de clarification (44) ainsi qu'à partir de la chambre de réaction (64) de la post-flottation, on réalise respectivement une séparation de la mousse de matières solides qui est traitée et dégradée dans un étage de clarification proprement biologique en fonction de sa composition et des bactéries que l'on est amené à utiliser.

7. Procédé selon l'une des revendications 1 à 6, caractérisé en ce que la recirculation des eaux usées est réalisée dans la phase de clarification aérobie biologique (44) en étant réglée selon les besoins jusqu'à l'obtention d'un enrichissement en oxygène correspondant à un multiple de la saturation normale, et dans l'étage de clarification anaérobie biologique (54) on retire l'oxygène jusqu'à près de zéro.

8. Procédé selon la revendication 7, caractérisé en ce qu'on fait recirculer les eaux usées jusqu'à dix fois par heure.

9. Procédé selon l'une des revendications 1 à 8, caractérisé en ce que l'on introduit automatiquement, dans le circuit interne, une interruption du retour de l'eau à partir du bassin d'écoulement (34) de l'eau clarifiée vers le bassin collecteur (1) et/ou un blocage de la conduite d'évacuation (70) du bassin d'écoulement de l'eau clarifiée (34) en ne conservant pas les valeurs prédéfinies de l'eau, en conservant le travail et en alimentant les étages biologiques de clarification.

10. Dispositif pour la mise en oeuvre du procédé selon l'une des revendications 1 à 9, caractérisé en ce que les mélangeurs gaz-eau (32 ; 48 ; 62) sont raccordés à une conduite de retour (82), d'eau clarifiée montée en dérivation, allant d'un bassin d'écoulement de l'eau clarifiée (32) à un bassin collecteur (1).

11. Dispositif selon la revendication 10, caractérisé en ce que le bassin de séparation des matières lourdes (12) est pourvu d'un trop plein raccordé d'une conduite de retour (26) allant au bassin collecteur (1).

12. Dispositif selon la revendication 10 ou 11, caractérisé en ce que, dans l'étage de clarification aérobie biologique (44) et dans l'étage de clarification anaérobie biologique (54), sont disposées des cartouches chauffantes (80) commandées par le procédé pour régler la température.

13. Dispositif selon l'une des revendications 10 à 12, caractérisé en ce que, dans le bassin d'écoulement de l'eau de clarification (34), sont disposés un régulateur de niveau (76) et une vanne (78) servant à la régulation de l'écoulement de l'eau clarifiée via la conduite de sortie (70) ou la conduite de retour (82) vers le bassin collecteur (1).

14. Dispositif selon l'une des revendications 10 à 13, caractérisé en ce que le séparateur de matières solides fines (8) consiste en une brosse hélicoïdale (11) tournant dans un tube de forme cylindrique (9) avec un pas, devenant plus étroit, en sens contraire du courant des eaux usées en train de s'écouler, pour les enroulements hélicoïdaux, la paroi du tube (9) étant pourvue d'un grand nombre de trous et d'ajours disposés en forme de grille.

15. Dispositif selon la revendication 14, caractérisé en ce que le tuyau (9) percé en forme de grille est disposé de façon concentrique dans un tube enveloppe (13) qui est pourvu, dans une zone médiane, d'un tuyau d'alimentation d'eau (15).

16. Dispositif selon la revendication 14 ou 15, caractérisé en ce que la chambre intermédiaire (27) est rendue étanche entre le tuyau intérieur (9) et le tube enveloppe (13) à l'extrémité inférieure (23).

17. Dispositif selon l'une des revendications 14 à 16, caractérisé en ce que le tube enveloppe (13) est rendu étanche à son extrémité supérieure en direction du tuyau (9), et le tuyau (9) est raccordé à une sortie (17) pour les boues rendue étanche vis-à-vis du tube enveloppe (13).

18. Dispositif selon l'une des revendications 10 à 17, caractérisé en ce que l'étage de clarification aérobie biologique (44) est formé à partir d'un corps creux (31) de forme cylindrique disposé verticalement, qui est pourvu d'une arrivée d'eaux usées (33) dans la zone du fond (35), d'une sortie d'eau (37) dans le couvercle (39) ou dans la zone supérieure de la bordure, et d'une dérivation (43) reliant la zone supérieure (48) du corps creux (31) à la zone du fond (35).

19. Dispositif selon l'une des revendications 10 à 18, caractérisé en ce que l'arrivée d'eaux usées (33) dans la zone du fond (35) débouche dans un pot de sortie (49) sous pression, dont l'ouverture d'arrivée d'eau et la largeur intérieure du tuyau d'amenée d'eau sont plus grands que la somme des orifices de sortie (51).

20. Dispositif selon l'une des revendications 10 à 19, caractérisé en ce que la surface de la section transversale du corps creux (31) au-dessus de l'entrée (53) de la dérivation (43), est fortement agrandie par rapport à la zone inférieure (35).

21. Dispositif selon l'une des revendications 10 à 20, caractérisé en ce que dans la dérivation (43) est disposée une pompe (57) dont la puissance de refoulement est réglable.

22. Dispositif selon l'une des revendications 10 à 21, caractérisé en ce que des raccords d'injection (59) pour les matières de stabilisation, sont associés à la dérivation (43) et/ou à l'arrivée des eaux usées (33).

23. Dispositif selon l'une des revendications 10 à 22, caractérisé en ce que dans le corps creux (31) sont disposés plusieurs capteurs.

24. Dispositif pour l'aération d'eaux usées, qui présente, dans une cuve fermée, une arrivée supérieure pour un agent léger, une arrivée inférieure pour un mélange de liquides et une conduite pour les eaux usées avec un corps de buse dont la tête est en liaison avec l'agent léger, selon la revendication 14, dispositif caractérisé en ce que le corps de buse (107) de forme cylindrique avec un alésage axial (114) consiste en un pied de buse (116), un entonnoir de buse (118) relié à celui-ci et une tête de buse (120) montée dessus, une chambre à chicanes (129) de forme annulaire étant formée entre la tête de buse supérieure ouverte (120) et l'entonnoir de buse (118), chambre à partir de laquelle une buse de forme annulaire (130) avec une fente (137) en forme de tronc de cône et réglable en largeur mène à la chambre de sortie de la buse (140).

25. Dispositif selon la revendication 24, caractérisé en ce que la fente de la buse (137) est formée de façon à aller en se rétrécissant vers la sortie de la buse, et le bord formé par la partie supérieure de la buse est pourvu d'un chanfrein d'accrochement (138).

26. Dispositif selon la revendication 24 ou 25, caractérisé en ce qu'une bague en caoutchouc (136) montée dans une liaison filetée entre l'entonnoir de la buse (118) et la tête de la buse (120), permet le réglage de l'ouverture de consigne de la fente de la buse (137).

27. Dispositif selon l'une des revendications 24 à 26, caractérisé en ce que la partie supérieure de la buse (131) est supportée élastiquement dans la tête de buse (120) par une bague en caoutchouc large (133).

28. Dispositif selon l'une des revendications 24 à 27, caractérisé en ce que le manchon (141) inséré dans la chambre de sortie de la buse (140) est constitué à son extrémité côté sortie de façon à aller en se rétrécissant en cône.

29. Dispositif selon l'une des revendications 24 à 28, caractérisé en ce qu'en dessous de l'extrémité du manchon (141) qui va en se rétrécissant en cône, on prévoit une ou plusieurs sorties de buse (142).

30. Dispositif selon l'une des revendications 24 à 29, caractérisé en ce que le tuyau d'alimentation (106) se termine dans une rainure annulaire (124) dans le pied de la buse (116) et forme à une certaine distance au-dessus de la rainure annulaire avec le chapeau d'obturation (122), un bord d'accrochement faisant tout le tour.

31. Dispositif selon l'une des revendications 24 à 30, caractérisé en ce que les alésages (126, 128) partant de la rainure annulaire (124) dans le pied de buse (116) forment une multiplicité de bords d'accrochement avec une deuxième rainure annulaire (127) disposée entre, au moyen de variations de la section transversale.
